# EUROPEAN PATENT APPLICATION

(11) **EP 2 444 025 A1**
(43) Date of publication of application: **25.04.2012**
(21) Application number: 10188221.5
(22) Date of filing: 20.10.2010
(51) Int. Cl.: A61C 8/00

(54) **A dental component, a dental implant assembly and a dental implant system**

(71) Applicant: Astra Tech AB, 431 21 Mölndal (SE)
(72) Inventor: Dahlström, Mattias, SE-427 34, BILLDAL (SE); Holmström, Johan, SE-428 37, KÅLLERED (SE)
(74) Representative: Somlo, Tommy

(57) **Abstract**

The present invention relates to a dental component which can be connected to one type of fixture in only one or two rotational position and to another type of fixture in a plurality of rotational positions. The dental component comprises either a single recess or two oppositely arranged recesses. The invention also relates to a dental implant assembly and a dental implant system.

## Description

### Technical field

The present invention relates to a dental component engagable with a dental fixture for insertion into a jawbone. The dental component comprises a fixture engagement portion comprising a circumferentially extending surface adapted to face a mating surface of the fixture. The invention also relates to a dental implant assembly which comprises such a dental component and a dental fixture. Furthermore, the invention further relates to a dental implant system comprising such a dental component, a first dental fixture and a second dental fixture.

### Background of the Invention

A frequent way today to restore a damaged or lost tooth is to install a dental implant comprising a fixture in the adjacent jawbone tissue (maxilla or mandible) and replace the damaged or lost tooth with a dental prosthesis. A superstructure, such as an abutment, may be used as a connection between the dental prosthesis and the installed fixture.

There are various fixture configurations. For instance, a fixture may have a flat topped coronal head portion, which may be installed in any rotational position relative to the jawbone. Another type of fixture configuration is a fixture having a sloped coronal end portion, such as disclosed in US 6,655,961, in which the length of the fixture is greater on the lingual side than on the buccal side in order to match the contour of the jawbone.

For a superstructure, such as an abutment, there may be an abutment/fixture-interface in which the abutment may be positioned in various rotational positions relative to the fixture, and there may be an abutment/fixture-interface in which the abutment should only be positioned in one way relative to the fixture. Thus, with regard to this interface, it would be desirable to ensure that the dentist connects the superstructure with a correct rotational orientation relative to certain fixtures, without restricting his/her freedom of action when connecting superstructures to other fixtures that do not have a designated mutual rotational orientation with respect to each other.

### Summary of the Invention

The present invention is based on the insight that one and the same dental component can be used to restrict the freedom of action in connection with a first type of fixture, while not restricting the freedom of action when used in connection with a second type of fixture.

According to at least a first aspect of the invention, a dental component is provided. The dental component is engagable with a dental fixture adapted to be inserted into a jawbone. The dental component comprises:
a fixture engagement portion comprising a circumferentially extending surface adapted to face a mating surface of the fixture, the circumferentially extending surface being provided with one of:
   a) a single indexing recess, wherein the dental component is engagable in only one rotational position relative to a fixture having only one mating indexing protrusion or in a plurality of rotational positions relative to a fixture being void of indexing protrusions, or
   b) only two indexing recesses, said two indexing recesses being arranged at substantially 180° relative to each other along the circumferentially extending surface, wherein the dental component is engagable in only two rotational positions relative to a fixture having only one mating indexing protrusion or in more rotational positions relative to a fixture being void of indexing protrusions wherein axially adjacent to the indexing recess or recesses the dental component has a circular cross-section.

Thus, by providing a dental component with only one indexing recess, the dental component can have a single rotational orientation/position with one type of fixture, but several possible rotational orientations/positions with another type of fixture. For a dental component having only two indexing recesses which are arranged at 180° relative to each other, i.e. oppositely arranged on the engagement portion, the dental component can have only two rotational orientations/positions with a fixture having a single indexing projection or two oppositely arranged indexing projections. It is believed that a dental professional arranging a dental component at 180° from the correct rotational position, will realize the error and correct appropriately by placing the dental component rotated half a turn. There are fixtures having shaped coronal portions which are symmetrical around a central plane, e.g. scalloped or wave-shaped coronal portions. An advantage of having a dental component with the two indexing recesses is that it does not matter in which one of the two possible orientations the dental component is engaged with the fixture. Furthermore, as will be discussed in connection with the drawings, it may be easier to manufacture a dental component with the two indexing recesses than with just a single indexing recess.

The circular cross-section coronally or apically of the indexing recess or recesses facilitates the free selection of rotational orientation relative to a fixture being void of an indexing protrusion. For instance, because of said circular cross-section, the dental component may be steplessly indexed relative to the fixture (which, suitably, also has a mating circular cross-section). In other words, the indexing recess or recesses can be regarded as provided in a first zone of the dental component and a second zone having said circular cross-section is provided apically or coronally of the first zone. The second zone may form part of the engagement portion or may be separate from the engagement portion. The circumferentially extending surface of the of the fixture engagement portion may form an outer perimeter of the fixture engagement portion, in which case the engagement portion may be adapted to mate with a socket of the dental fixture. Alternatively, the circumferentially extending surface may from an inner perimeter of the fixture engagement portion, in which case the engagement portion may be adapted to mate a summit of the dental fixture.

Regardless of the whether the indexing recess/recesses is/are provided on an inner or outer perimeter of the engagement portion, the circumferentially extending surface may have a substantially circular cross-section. Alternatively, the cross-section may be elliptical, polygonal or any other suitable shape.

It should be understood that although the dental component has a single indexing recess or only two indexing recesses, there may be other types of recesses present in the dental component which do not contribute to define the rotational position of the dental component relative to the fixture. For instance, there may be recesses for supplying adhesive material or for other purposes.

According to at least one example embodiment, the engagement portion comprises a substantially cylindrical section, wherein said one or two recesses is/are provided at said substantially cylindrical section.

According to at least one example embodiment, the engagement portion comprises an apically tapering section, wherein said one or two recesses is/are provided at said apically tapering section. The apically tapering section may be advantageous for providing a conical seal with a corresponding tapering section of a fixture socket.

According to at least one example embodiment, said one or two recesses has/have a depth in a radial direction of the dental component, wherein said depth is increasing from a coronal portion towards an apical portion of the recess/recesses. These recesses having apically increasing depth may be arranged on a cylindrical engagement portion or on a tapering engagement portion.

According to at least one example embodiment, said one or two recesses forms/form one or two openings, respectively, extending from outside of the dental component into an axial through hole present inside the dental component. For instance, a dental component in the form of an abutment or impression element may have an axial through hole. Two oppositely located indexing recesses can be readily provided, by simply passing a cutting/milling tool or the like from outside the dental component, via a straight line right through and emerging at the opposite side of the dental component. Alternatively, if said opening-forming indexing recesses are provided at an end of the dental component, such as the apical end, a blade may be brought from below the dental component and make two slits in the annular wall of the dental component, thus forming said indexing recesses.

According to at least one example embodiment, the recess extends less than 180° in the circumferential direction of the fixture engagement portion, for instance less than 90°, or less than 60°, such as less than 45°, for instance about 5°-30, such as 10°-25°.

According to at least one example embodiment, the or each recess extends over less than 50% of the fixture engagement portion, such as 5 - 45%, for instance 10 - 40 %. If the dental component is connected to a fixture lacking a mating indexing projection, there will be an empty space defined by the recess and the fixture wall. By limiting the circumferential extension of the recess a large contact surface is obtainable between the engagement surface of the dental component and mating surface of the fixture.

The dental component may be a component selected from the group consisting of a driver, an abutment, an abutment replica, an abutment blank and an impression element. An abutment or an impression element may also be in the form of a scan abutment or digital impression element, which are used when scanning the oral cavity of the patient. This is in contrast to placing some impression material on the abutment/impression element, which material is then hardened and used to mimic the shape of the teeth adjacent the abutment/impression element.

According to at least one example embodiment, the dental component is in the form of an abutment comprising a body part and a screw part, wherein the body part comprises
- said fixture engagement portion,
- a prosthesis-receiving portion which extends coronally of the fixture, and
- a through hole extending through the body part,
wherein the screw part is adapted to be inserted into the through hole and engage an internal thread of the fixture in order to secure the body part to the fixture.

Thus, one and the same abutment may be used in either a determined rotational position relative to a fixture or in one of a plurality of rotational positions relative to another fixture. It should be noted, that in this application, a prosthesis-receiving portion is not limited to receive a prosthetic crown, but may also function as a bridge support.

According to at least one example embodiment, the dental component is in the form of an angled abutment in which the engagement portion has a first longitudinal axis and the prosthesis-receiving portion has a second longitudinal axis, wherein the first and second longitudinal axes are inclined at a non-zero angle relative to each other. Said angle may e.g. be in the range of 5°-60°, such as 10°-50°, for instance 15°-45°. For a fixture having a sloped top portion, it may desirable to have a similarly sloping portion of the engaging abutment so that such a sloping portion follows the contour of the gingiva. Thus, in that case it is desirable to only have one indexing position for the abutment. However, to compensate for a disadvantageous direction of extension of the abutment, the prosthesis carrying portion may be inclined relative to the fixture engaging portion.

According to at least a second aspect of the invention, a dental implant assembly is provided. The dental implant assembly comprises a dental component according to the previously described first aspect of the invention connected to or to be connected to a dental fixture adapted to be inserted into a jawbone. The fixture comprises an indexing projection adapted to mate said indexing recess/recesses of the dental component, wherein,

in the case of a single recess, the dental component only has one possible indexing position relative to the fixture, and

in the case of two recesses, the dental component has two possible indexing positions relative to the fixture.

It should be noted that in this latter case, the fixture may, optionally, have two opposing indexing projections which match the two recesses. Alternatively, for both cases, the fixture may be provided with only one indexing projection.

Thus, according to at least one example embodiment, the dental component has said two indexing recesses arranged at substantially 180°, and the fixture has only two mating indexing projections, allowing the dental component to be arranged in two indexing positions at 180° relative to each other.

According to at least one example embodiment, the indexing recess/recesses has/have a larger extension in the circumferential direction than said indexing projection, thereby enabling a rotational fine tuning of the dental component relative to the fixture due to the resulting play present between the recess/recesses and the projection/projections. A screw part which connects the dental component to the fixture may be inserted in a through hole in the dental component. Such a screw part may achieve a satisfactory rotational locking. Thus, an indexing recess and corresponding indexing projection do not have to provide a complete rotational locking, but rather provide a positional guidance.

According to at least one example embodiment, the fixture comprises one or more driver recesses for receiving a driver having corresponding protrusions. Thus, a fixture, may on the one hand have an indexing projection, and on the other hand one or more driver recesses which may be placed on the same axial level as the indexing projection, or alternatively on a separate level.

According to at least a third aspect of the invention, a dental implant system is provided. The dental implant system comprises
- a first dental fixture adapted to be inserted into a jawbone, the first fixture comprising only one indexing projection,
- a second dental fixture adapted to be inserted into a jawbone, the second fixture being void of indexing projections, and
- a dental component in accordance with the first aspect of the invention having a single indexing recess, wherein the dental component is engagable with the first fixture in only one rotational (indexing) position, and wherein the dental component is engagable with the second fixture in a plurality of rotational (indexing) positions in a stepless manner.

According to at least a fourth aspect of the invention, a dental implant system is provided. The dental implant system comprises
- a first dental fixture adapted to be inserted into a jawbone, the first fixture comprising only one or two indexing projections,
- a second dental fixture adapted to be inserted into a jawbone, the second fixture being void of indexing projections, and
- a dental component in accordance with the first aspect of the invention having only two indexing recess arranged at substantially 180° relative to each other along the circumferentially extending surface, wherein the dental component is engagable with the first fixture in only two rotational (indexing) positions, and wherein the dental component is engagable with the second fixture in more rotational (indexing) positions in a stepless manner.

It should be understood that in the present disclosure, a dental implant may comprise a dental fixture and a superstructure, such as an abutment.

A dental fixture is for use as the anchoring member of a dental prosthesis. To this end, the dental fixture is insertable into a pre-prepared bore hole in the bone tissue of a jawbone (maxilla or mandible) at a site where the dental prosthesis is required. The dental fixture is normally rotated into the bore hole.

For screw-type dental fixtures the bore hole may be provided with internal threads in advance or may be left un-tapped with the dental fixture provided with a self-tapping capacity, e.g. by the provision of one or more axially-extending cutting recesses, edges or notches, etc in the fixture thread. For instance, an apical end portion of the fixture may be provided with 2-4 cutting recesses, such as 3 cutting recesses. Other number of cutting recesses are readily conceivable.

A superstructure for connecting a prosthetic part to the fixture may comprise an abutment, spacer or other transmucosal component which engages to the dental fixture to bridge the gingiva overlying the maxilla or mandible. The prosthetic part, e.g. a crown, bridge or denture may be secured to the abutment. There are various other forms that the superstructure can take. For instance, the prosthetic part may be secured directly to the dental fixture. A dental implant may thus comprise an abutment connected to the dental fixture, or the dental fixture without an abutment.

The term "coronal" is here and throughout this application used to indicate a direction towards a head end or trailing end of the dental implant. For instance, in a situation where an abutment is connected to a dental fixture, the coronal direction of the abutment would be a direction towards the part of the abutment being directed away from the fixture. Conversely, the term "apical" indicates a direction towards an insertion end of the component. Thus, apical and coronal are opposite directions. Furthermore, the term "axial direction" or "axially" is used throughout this application to indicate a direction taken from the coronal end to the apical end, or vice versa. The term "radial direction" or "radially" indicates a direction perpendicular to the axial direction.

A blind bore or socket may extend apically into the fixture body from the coronal end to an end surface in-between the apical and coronal ends of the fixture body for a superstructure to be secured to the fixture. The socket may comprise an internally-threaded section for screw connection of the superstructure to the fixture. A section of the socket, such as the coronal section, may be tapered towards the apical end. The tapered section is suitably arranged coronally of the internally-threaded section.

A radially projecting indexing protrusion may be provided on an internal wall in a fixture socket, wherein the engagement portion of a dental component is adapted to be received in said socket. Alternatively the indexing protrusion may be provided on an external wall of a head portion which is to be enclosed by a dental component connectible to the fixture. Although this internal/external distinction has been made between socket and head portion, it should be noted that a head portion does not necessarily have an outer wall for receiving the engagement portion of the dental component. On the contrary, a head portion may be provided with an internal socket. Thus, any exemplified embodiments discussing a socket may be in the form of a socket in a head portion of a dental fixture.

The fixture may be used in a one stage procedure or a two stage procedure. In a one stage procedure a healing or temporary abutment is connected to the fixture to form the gingival tissue, and after a healing period the healing or temporary abutment is replaced by a permanent abutment. For a two stage procedure the fixture is provided with a cover screw and the gingival tissue is sutured over the fixture and cover screw, and after a healing period the tissue is opened up and an abutment is connected to the fixture after removal of the cover screw.

The fixture may have a conically tapering end portion which tapers towards the coronal end. The axial extent of this coronal end portion is small compared to the total length of the fixture, as an example no more than 4 % of the total length, such as in the range of 1.5% -3.7%. The coronal end portion may suitably be provided without a threaded surface, e.g. having a smooth or a roughened (such as blasted) surface.

As previously discussed with regard to the various aspects of the invention, the fixture may have a substantially flat coronal end surface which is perpendicular to the longitudinal axis of the fixture. Alternatively, the coronal end surface may have a sloped contour relative to the longitudinal axis of the fixture, e.g. such that when positioned within the jawbone the length of the fixture is larger on a lingual side and shorter on a buccal side of the fixture. Another alternative is a saddle-shaped or wave-like coronal end surface.

The length of the dental fixture may be in the range of 5-19 mm, depending on the clinical situation. The outer diameter of the dental fixture may suitably be in the range of 2-6 mm, such as 3-5 mm.

The fixture may be substantially cylindrical or slightly tapering from the coronal end towards the apical end. If the fixture has a slight tapering, the core of the fixture and the outer periphery defined by e.g. thread tops may have the same or different angle of taper. Furthermore, the core of the fixture may be cylindrical while the thread tops describe a conicity or, conversely, the core of the fixture may be tapered while the thread tops describe a generally cylindrical geometry. Alternatively, the fixture may comprise a combination of one or more cylindrical and/or one or more tapering portions. Thus, one or more portions of the fixture may have e.g. thread tops lying in a common imaginary cylindrical surface, which cylindrical surface is parallel with the longitudinal axis of the fixture. Alternatively or additionally, one or more portions of the fixture may have thread tops lying in an imaginary conical surface which in the apical direction is tapering towards the longitudinal axis.

The externally threaded fixture may comprise one or more thread spirals.

The term "pitch" is used to indicate the axial distance between adjacent tops of a threading. The term "lead" is used to indicate the distance advanced parallel to the longitudinal axis when the fixture is turned one revolution, i.e. it corresponds to the pitch multiplied with the number of thread spirals. For a single thread spiral having a constant pitch, the lead is equal to the pitch; for a double thread spiral, the lead is twice the pitch.

The term "microthread" is used to indicate a thread having a height which is no greater than 0.2 mm. According to at least one example embodiment, the fixture is provided with microthreads having a height in the range of 0.02-0.2 mm, such as 0.05-.015 mm, for instance 0.1 mm. The term "macrothread" is used to indicate a thread having a height which is greater than 0.2 mm. According to at least one example embodiment, the fixture is provided with macrothreads having a height in the range of 0.25-0.35 mm, such as 0.3 mm.

Suitably, microthreads may be located coronally of macrothreads. For instance, microthreads may be arranged to engage dense cortical bone and macrothreads may be arranged to engage porous spongious/cancellous bone. The lead of a microthread suitably corresponds to the lead of a macrothread. The macrothread pitch may, as an example, be 2-4 times, such as 3 times, the pitch of the microthreads. The pitch (top-to-top spacing) at a fixture portion provided with microthreads may be around 0.20-0.24 mm. The pitch (top-to-top spacing) at a fixture portion provided with macrothreads may be around 0.60-0.72 mm.

Microthreads can be regarded as defined, oriented roughness. A non-oriented roughness having smaller dimensions, for instance obtained by blasting, etching, etc., may be superimposed on microthreads as well as on macrothreads.

A thread profile comprises two flanks, a top radius R, at the apex formed between the intersection of said two flanks, a bottom radius r formed between two adjacent threads, said flanks forming an angle v with a plane which is perpendicular to a cross section of said thread and perpendicular to a plane which is a tangent to the surface of the fixture body, said profile further having a height D. Suitably for 10° ≤ v < 35 °, R is greater than 0.4 x D and, for 35° ≤ v < 55 °, R is greater than 0.2 x D.

### Brief description of the drawings

Fig. 1 illustrates a dental fixture that may be used in a dental implant assembly or dental implant system according to at least one example embodiment, and a driver which may be connected to the fixture for installing the fixture in the jawbone.
Fig. 2 illustrates an implant assembly according to at least one example embodiment of the invention.
Fig. 3 illustrates an implant assembly according to at least one other example embodiment of the invention.
Fig. 4 illustrates an implant assembly according to at least yet another example embodiment of the invention.
Fig. 5 illustrates an implant assembly according to at least a further example embodiment of the invention.

### Detailed description of the drawings

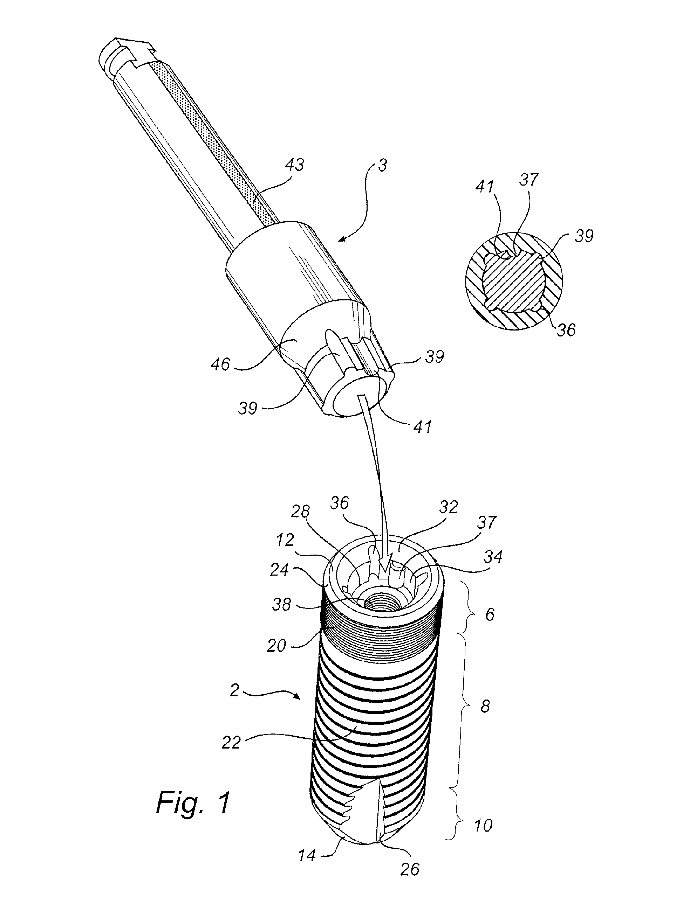

Fig. 1 illustrates a dental fixture 2 that may be used in a dental implant assembly or dental implant system according to at least one example embodiment, and a driver 3 which may be connected to the fixture 2 for installing the fixture 2 in the jawbone.

The herein illustrated fixture 2 has a coronal portion 6 extending apically from a coronal end 12 of the fixture 2, and an apical portion 10 extending coronally from an apical end 14 of the fixture 2. An intermediate portion 8 extends between the coronal portion 6 and the apical portion 10.

The apical portion 10 has a conicity tapering towards the apical end 14 of the fixture 2 to ease insertion of the fixture 2 into a bore-hole in the jawbone. The angle of taper relative to the longitudinal axis of the fixture 2 may, for instance, be about 10°-20°, such as 15°. The apical portion 10 may either be threaded or non-threaded. Whether provided with thread or not, the apical portion 10 may optionally, similarly to the coronal portion 6 and/or the intermediate portion 8, further be provided with a blasted, etched or otherwise roughened surface structure.

The fixture 2 has a core from which a surface structure projects, in the illustrated example being in the form of threads.

The coronal portion 6 is herein illustrated as being at least partly provided with microthreads 20, having three thread spirals, although another number is conceivable, such as 1, 2, 4 or more spirals. Although microthreads 20 have been illustrated, according to at least an alternative example embodiment the coronal portion 6 is at least partly provided with macrothreads 22, similarly to the intermediate portion 8, either as a separate thread spiral or as a continuation of the thread spiral at the intermediate portion 8. According to at least another alternative example embodiment, instead of microthreads, the coronal portion may be provided with a plurality of annular ridges, which to the naked eye could give the same visual appearance as microthreads. Other conceivable alternatives are circumferential lines of beads or non-oriented/randomly provided projections such as bulges.

In the illustrated example embodiment, the macrothreads 22 at the intermediate portion 8 has the same lead as the microthreads 20 at the coronal portion 6. However, the pitch of the macrothreads 22 is three times the pitch of the microthreads 20, since the microthreads 20 comprise three thread spirals.

The length of the herein illustrated coronal portion 6 may be about 1-2 mm, such as 1.5 mm. However, shorter or longer lengths are readily conceivable. The relative length of the coronal portion 6 may also be selected from a wide range, such as 5-50% of the total length of the fixture 2, e.g. 10-20%.

The coronal portion 6 comprises a tapering end portion 24, which tapers towards the coronal end 12 of the fixture 2. The tapering end portion 24 is no more than 4% of the total length of the fixture 2. The surface of the tapering end portion 24 may be non-threaded, either smooth or blasted (or otherwise roughened).

The intermediate portion 8 comprising macrothreads 22 is herein illustrated as having one thread spiral, however, the intermediate portion 8 may alternatively have two or more thread spirals. Similarly, although illustrated as having a substantially straight cylindrical shape, the intermediate portion 8 may have a slightly tapering shape towards the apical portion 10, in which case the angle of taper may e.g. be 3° or less, such as about 1°-2°.

Cutting recesses 26 or grooves extend from the apical end 14 into the intermediate portion 8. The number of cutting recesses 26 may be one or more, such as two, three or four cutting recesses, suitably symmetrically positioned about the circumference of the apical end 14 of the fixture 2 for self-tapping of the fixture 2 when being screwed/rotated into the bore-hole provided in the maxilla or mandible.

A socket 28 having an open end is provided in the coronal end 12 of the fixture 2. The socket 28 extends apically into the fixture 2. The socket 28 is for receiving a dental component such as an abutments as exemplified in the subsequent figures. The abutment will bridge the gingiva overlying the bore-hole and support/present a prosthetic part. However, the socket 28 may also receive other dental components such as an abutment replica, an abutment blank, an impression element and a driver 3.

Although various alternative configurations are conceivable, the socket 28 is herein illustrated as having a conical coronal section 32 and a substantially cylindrical intermediate wall section 34. Four radially extending driver recesses 36 are provided in the intermediate wall section 34 and may as illustrated in the figure also extend into the conical coronal section 32. As an alternative, the intermediate wall section 34 may be substantially conical.

The socket 28 is further provided with an internally threaded apical section 38.

Additionally, the socket 28 is provided with an indexing protrusion 37. The indexing protrusion 37 projects radially from the socket wall towards the socket centre. The indexing protrusion 37 is herein located between two driver recesses 36. Thus, the indexing protrusion 37 and the driver recesses 36 are provided on the same level along the longitudinal axis of the fixture 2. However, other alternatives are conceivable as well. For instance, the indexing protrusion 37 may be located on a different axial level. It can for instance be located apically or coronally of the driver recesses 36. The indexing protrusion 37 may, as indicated in the figure, be located in a cylindrical intermediate wall section 34 or, as an alternative, be located in a conical wall section (e.g. coronal conical section 32).

The driver 3, which is operative to install the fixture 2 in the jawbone by rotating it into the bone, has four lobes 39 dimensioned and configured to mate with the four driver recesses 36 in the socket 28 of the fixture 2, thereby providing a satisfactory engagement for driving the fixture 2 into the bone. Additionally, the driver 3 is provided with an indexing recess or depression 41 which may be sized to fit the indexing protrusion 37, thereby providing additional engagement and transfer of driving torque to the fixture 2. Alternatively, the depression 41 may be overdimensioned relative to the indexing protrusion, thus only providing partial contact or no contact with the indexing protrusion 37 when the driver 3 is connected to the fixture 2.

The driver 3 is provided with a conical portion 46, which is located axially adjacent to the depression 41 (in this case coronally of the depression) and which has a circular cross-section.

The cross-section illustrated in Fig. 1 shows the configuration when the driver 3 has been inserted into the socket 28 of the fixture 2. As may be seen, the four lobes 39 of the driver 3 has mated with the four driver recesses 36 of the fixture 2.

The driver 3 may be a piece which can be used on its own, or alternatively, at its coronal end (not shown), the driver 3 may be connected to a handle, a wrench (such as a ratchet wrench), a power driver machine, etc.

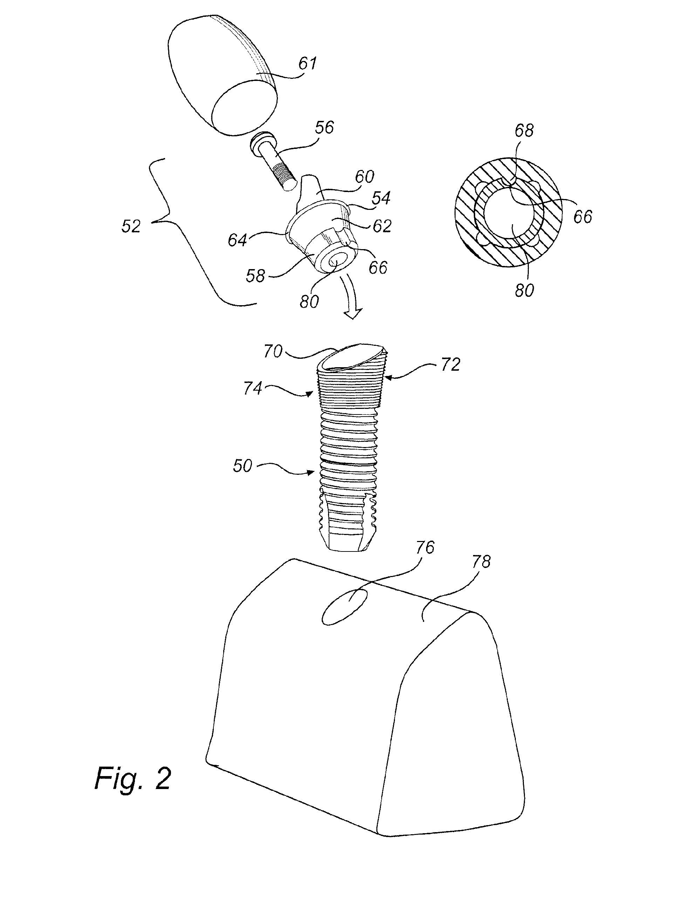

The driver 3 is provided with a visually distinctive marking 43, herein illustrated as an axial line, e.g. aligned with one of the four lobes 39 or the depression 41 at the engagement portion of the driver 3. The distinctive marking 43 may have a color which is different from the rest of the driver 3, it may have different texture, or be slightly bulging, or any other appropriate viewable distinction compared to the rest of the driver 3. While the distinctive marking 43 is of limited use in connection with a fixture with no rotational limitation in the jawbone (such as the fixture in Fig. 1), it is of more use in connection with a fixture having a designated rotational orientation in the jawbone (such as the fixture in Fig. 2). With the latter type of fixture, the driver 3 can only be positioned in a single rotational indexing position, meaning that each time the driver engages such a fixture, the rotational position of the distinctive marking 43 relative to the fixture will always be the same. Thus, by viewing the axial line, a user will be able to deduce the rotational position of the fixture in the jawbone.

Nevertheless, also for the fixture in Fig. 1, the distinctive marking 43 on the driver may be useful, in particular when the fixture is installed obliquely into the bone. In such case an angled abutment may be connected to the fixture, to ensure that the prosthesis-receiving portion of the abutment will be correctly arranged in the jawbone, thus allowing a correct alignment of the prosthetic tooth with the surrounding teeth or correct alignment with a bridge structure. A dental professional may have a whole set of different angled abutments, each having an indexing recess at different rotational locations relative to the inclination of the prosthesis-receiving portion. Thus, if the fixture is installed obliquely into the bone, the dental professional will realize by looking at the distinctive marking 43, the rotational position of the indexing protrusion, and this will help him/her to choose an angled abutment from said set of abutments which will provide the correct inclination in the oral cavity.

Fig. 2 illustrates an implant assembly according to at least one example embodiment of the invention. The implant assembly comprises a dental fixture 50 and a dental component, herein illustrated as a two-piece abutment 52.

The dental component is herein illustrated as a two-piece abutment consisting of a body part 54 and a screw part 56. The body part 54 comprises a fixture engagement portion 58, which is herein illustrated as having a generally cylindrical enveloping or circumferentially extending surface, although other enveloping surfaces, such as tapering, would be a conceivable alternatives. The enveloping or circumferentially extending surface thus forms an outer perimeter of the fixture engagement portion 58. The body part 54 further comprises a dental crown-receiving or prosthesis-receiving portion 60 which extends coronally of the fixture 50 above the gingiva to receive a prosthetic tooth 61. An extension portion 62, herein illustrated as coronally flaring up to a shoulder 64, is intended to extend through the gingiva and is provided between the engagement portion 58 and the prosthesis-receiving portion 60. The extension portion 62 has a cylindrical cross-section and is located coronally of the indexing recess 66.

A single indexing recess 66 is provided in the cylindrical enveloping surface of the engagement portion 58. The indexing recess 66 is herein illustrated as straight semi-cylindrical, although other shapes of the indexing recess are conceivable as long as the indexing recess 66 can properly mate with the indexing protrusion 68 of a fixture to define a rotational position of the abutment (illustrated in Fig. 2 in the cross-sectional view of the assembled state).

The fixture 50 illustrated in Fig. 2 substantially corresponds to the fixture 2 illustrated in Fig. 1. However, while the coronal end 12 of the fixture 2 in Fig. 1 is flat, the coronal end 70 of the fixture 50 in Fig. 2 is sloped, wherein a lingual side 72 has a longer extension than a buccal side 74. When the fixture 50 according to Fig. 2 has been installed in a bore hole 76 in the jawbone 78, the coronal end 70 should follow the sloped contour of the jawbone 78. Thus, the fixture 50 has a desired rotational position relative to the jawbone 78. A driver 3, such as the one illustrated in Fig. 1, may be provided with a distinctive visual marking 43 and be received in only one indexing position relative to the fixture 50. The marking will thus indicate to the user the direction of the sloping coronal end 70 as the fixture 50 is being driven into the jawbone 78 and the final rotational position of the fixture 50 may be easily adjusted when looking at the distinctive marking. The abutment 52 can only have one rotational position relative to the fixture 70.

Reference is now made to Fig 2 and the cross-sectional illustration of the abutment/fixture interface in their assembled state (before insertion of the screw part). The body part 54 of the abutment is provided with a through-hole 80, wherein the screw part 56 is adapted to be inserted into the through-hole 80 and engage an internal thread of the fixture 50 in order to secure the body part 54 to the fixture. The abutment 52 can only be correctly engaged in a single rotational position relative to the fixture 50, i.e. only in such position in which the indexing recess 66 mates with the indexing protrusion 68 of the fixture 50. Thus, the user is prevented from selecting an orientation of the abutment 52 which would be less appropriate with regard to the specific configuration of the jawbone 78 and the gingiva.

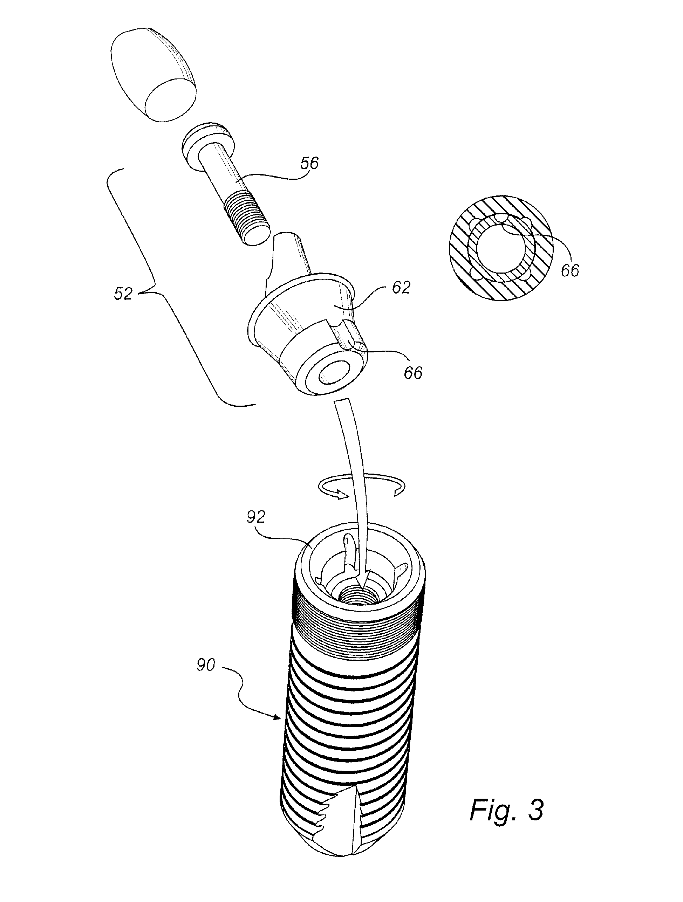

Fig. 3 illustrates an implant assembly according to at least one other example embodiment of the invention. The fixture 90 has a substantially flat coronal end 92. Its extension is equal on the lingual and buccal sides. In the fixture of Fig. 3, the indexing protrusion 68 shown in Fig. 2 has been omitted. Axially (here coronally) adjacent to the indexing recess 66, the conical extension portion 62 of the abutment has a circular cross-section (the cross-section lying in a plane perpendicular to the abutment axis). Although a conical extension portion 62 has been illustrated, a cylindrical extension portion would also be conceivable. The circular cross-section enables free rotation of the body part 54 to a desired position, in which it is fixed by the screw part 56. Thus, the same abutment 52 may be inserted in the fixture of Fig. 3 without having a defined rotational position relative to the fixture 90. Thus, the abutment 52 may be steplessly rotated to its desired position before locking it to the fixture 90 with the screw part 56. Thus, since the indexing recess 66 will not mate with an indexing protrusion, there will be a space defined by the indexing recess 66 of the abutment 62 and the interior wall of the fixture 90. As regards the remaining features of the fixture in Fig. 3, these may correspond to the features described with regard to the fixtures in Figs. 1 and 2.

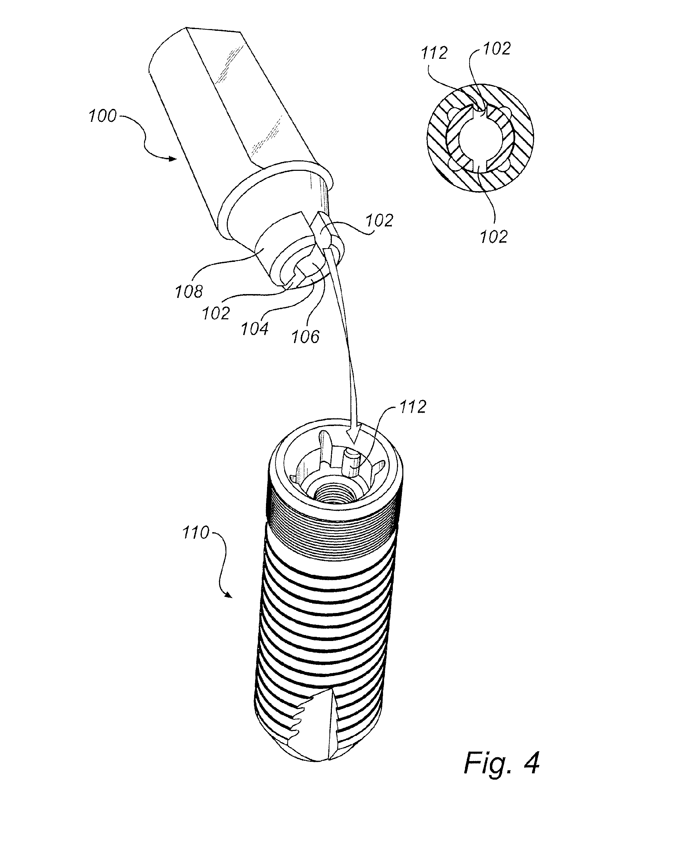

Fig. 4 illustrates an implant assembly according to at least yet another example embodiment of the invention. In this example embodiment, the dental component 100, herein illustrated as an abutment, is provided with two indexing recesses 102 which are placed opposite to each other. The indexing recesses 102 can mate with an indexing protrusion 112 of a fixture 110. The indexing recesses 102 are formed as slits which are open towards the apical end 104 of the abutment 100 and which are also open towards an interior central hole 106 of the abutment 100. The indexing recesses 102 may be provided, e.g. by simply moving a cutting blade coronally from the apical end 104 of the abutment 100, along a certain axial distance of the engagement portion 108. This is advantageous, since it provides an easier and quicker forming of the two indexing recesses 102 in a dental component compared to forming the single indexing recess illustrated in the previous figures. Although, the presence of two indexing recesses 102 may cause the dental professional to insert the dental component 100 incorrectly, i.e. rotated 180° to the intended position, a 180° error would be visible to the dental professional and would easily be corrected.

It may be noted that since this dental component 100 has two indexing recesses 102, it would also fit with a fixture having two mating indexing protrusions.

Axially adjacent to the indexing recesses 102 the abutment has a circular cross-section.

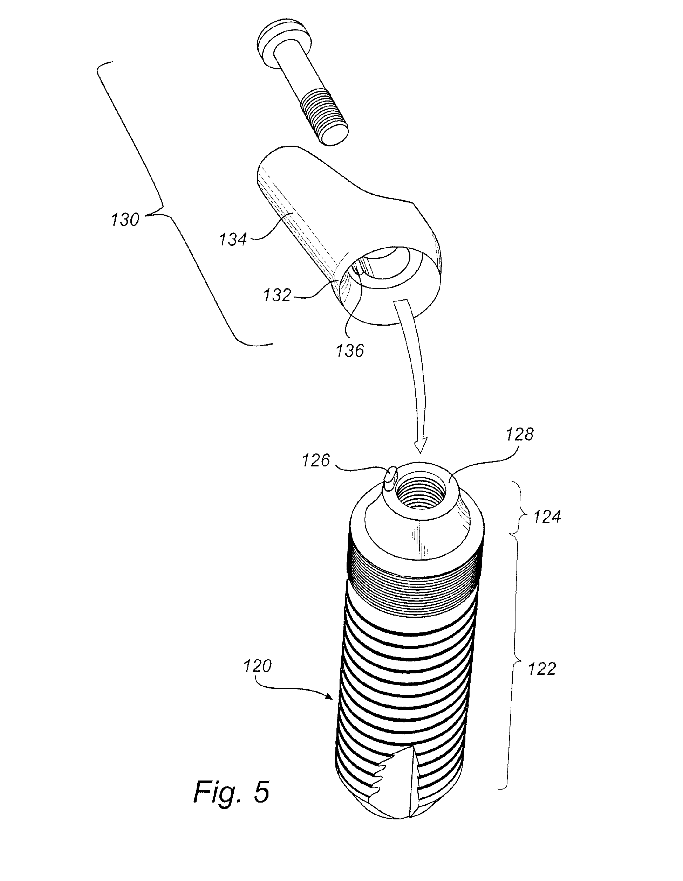

Fig. 5 illustrates an implant assembly according to at least a further example embodiment of the invention. In this example, a transgingival fixture 120 is illustrated. Thus, similarly to the previously illustrated fixtures, the present fixture 120 has bone apposition portion 122, adapted to be submerged into the bone tissue. Additionally, the present fixture 120 has a summit portion 124 adapted to be located outside the bone. An indexing protrusion 126 projects coronally from the coronal end 128 of the fixture 120, however, the indexing protrusion could be located elsewhere, e.g. extending radially from the outer perimeter of the soft tissue apposition portion, or it may even be located in a socket, as shown in the previous example figures. A dental component in the form of an angled abutment 130 is illustrated in the Fig. 5. The angled abutment 130 comprises an engagement portion 132 having a first longitudinal axis and a prosthesis-receiving portion 134 having a second longitudinal axis. The first and second longitudinal axes are inclined at a non-zero angle relative to each other. The angled abutment 130 has a coronally extending indexing recess 136 inside the engagement portion 132. In other words the indexing recess 136 is located in a circumferentially extending surface which forms an inner perimeter of the engagement portion 132. The indexing recess 136 is configured and dimensioned to mate with the indexing protrusion 126 on the fixture 120 as the engagement portion 132 is passed over the summit portion 124 of the fixture 120. Adjacent to and apically of the indexing recess 136 the abutment is provided with an internal conical portion having a circular cross-section. It should be understood that suitably configured angled abutments may be used in connection with other types of fixtures as well, such as those illustrated in Figs. 1-4.

## Claims

1. A dental component engagable with a dental fixture adapted to be inserted into a jawbone, comprising:
a fixture engagement portion comprising a circumferentially extending surface adapted to face a mating surface of the fixture, the circumferentially extending surface being provided with one of:
a) a single indexing recess, wherein the dental component is engagable in only one rotational position relative to a fixture having only one mating indexing protrusion or in a plurality of rotational positions relative to a fixture lacking the indexing protrusion, or
b) only two indexing recesses, said two indexing recesses being arranged at substantially 180° relative to each other along the circumferentially extending surface, wherein the dental component is engagable in only two rotational positions relative to a fixture having only one mating indexing protrusion or in more rotational positions relative to a fixture lacking the indexing protrusion,
wherein axially adjacent to the indexing recess or recesses the dental component has a circular cross-section.

2. The dental component as claimed in claim 1, wherein the engagement portion comprises a substantially cylindrical section, wherein said one or two recesses is/are provided at said substantially cylindrical section.

3. The dental component as claimed in claim 1, wherein the engagement portion comprises an apically tapering section, wherein said one or two recesses is/are provided at said apically tapering section.

4. The dental component as claimed in any one of claims 1-3, wherein said one or two recesses has/have a depth in a radial direction of the dental component, wherein said depth is increasing from a coronal portion towards an apical portion of the recess/recesses.

5. The dental component as claimed in any one of claims 1-3, wherein said one or two recesses forms/form one or two openings, respectively, extending from outside of the dental component into an axial through hole present inside the dental component.

6. The dental component as claimed in any one of claims 1-5, being a component selected from the group consisting of a driver, an abutment, an abutment replica, an abutment blank and an impression element.

7. The dental component as claimed in claim 6, being in the form of an abutment comprising a body part and a screw part, wherein the body part comprises
- said fixture engagement portion,
- a prosthesis-receiving portion which extends coronally of the fixture, and
- a through hole extending through the body part,
wherein the screw part is adapted to be inserted into the through hole and engage an internal thread of the fixture in order to secure the body part to the fixture.

8. The dental component as claimed in claim 6 or 7, being in the form of an angled abutment in which the engagement portion has a first longitudinal axis and the prosthesis-receiving portion has a second longitudinal axis, wherein the first and second longitudinal axes are inclined at a non-zero angle relative to each other.

9. A dental implant assembly, comprising a dental component as claimed in any one of claims 1-8 connected to or to be connected to a dental fixture adapted to be inserted into a jawbone, the fixture comprising an indexing projection adapted to mate said indexing recess/recesses, wherein,
in the case of a single recess, the dental component only has one possible indexing position relative to the fixture, and
in the case of two recesses, the dental component has two possible indexing positions relative to the fixture.

10. The dental implant assembly as claimed in claim 9, wherein the fixture has only one indexing projection.

11. The dental implant assembly as claimed in claim 9, wherein the dental component has said two indexing recesses arranged at substantially 180°, and wherein the fixture has only two mating indexing projections, allowing the dental component to be arranged in two indexing positions at 180° relative to each other.

12. The dental implant assembly as claimed in any one of claims 9-11, wherein the indexing recess/recesses has/have a larger extension in the circumferential direction than said indexing projection, thereby enabling a rotational fine tuning of the dental component relative to the fixture due to the resulting play present between the recess/recesses and the projection/projections.

13. The dental implant assembly as claimed in any one of claims 9-13, wherein the fixture comprises one or more driver recesses for receiving a driver having corresponding protrusions.

14. A dental implant system, comprising
- a first dental fixture adapted to be inserted into a jawbone, the first fixture comprising only one indexing projection,
- a second dental fixture adapted to be inserted into a jawbone, the second fixture being void of indexing projections, and
- a dental component as claimed in any one of claims 1-8 having a single indexing recess, wherein the dental component is engagable with the first fixture in only one rotational position, and wherein the dental component is engagable with the second fixture in a plurality of rotational positions in a stepless manner.

15. A dental implant system, comprising
- a first dental fixture adapted to be inserted into a jawbone, the first fixture comprising only one or two indexing projections,
- a second dental fixture adapted to be inserted into a jawbone, the second fixture being void of indexing projections, and
- a dental component as claimed in any one of claims 1-8 having only two indexing recess arranged at substantially 180° relative to each other along the circumferentially extending surface, wherein the dental component is engagable with the first fixture in only two rotational positions, and wherein the dental component is engagable with the second fixture in more rotational positions in a stepless manner.
